# EUROPEAN PATENT SPECIFICATION

(11) **EP 4 591 954 B1**
(45) Date of publication and mention of the grant of the patent: **25.11.2026**
(21) Application number: 24220164.8
(22) Date of filing: 16.12.2024
(51) Int. Cl.: A63B 21/062, A63B 21/00, G01L 5/04, A63B 24/00

(54) **PASSIVELY TRACKING ACTIVITY OF CABLED-RESISTANCE STRENGTH TRAINING EXERCISE MACHINES**
PASSIVE VERFOLGUNG DER AKTIVITÄT VON ÜBUNGSMASCHINEN FÜR VERKABELTE WIDERSTANDSFESTIGKEIT
SUIVI PASSIF DE L'ACTIVITÉ DE MACHINES D'EXERCICE D'ENTRAÎNEMENT DE RÉSISTANCE À CÂBLE

(30) Priority: 25.01.2024 US 202463625179 P; 28.10.2024 US 202418929198
(43) Date of publication of application: 30.07.2025
(73) Proprietor: Garman, Mark B., Orinda CA 94563 (US)
(72) Inventor: Garman, Mark B., Orinda CA 94563 (US)
(74) Representative: Boult Wade Tennant LLP

(56) References cited:
- WO-A1-2021/217767
- CN-A- 111 905 330
- DE-U1- 202018 100 743
- IT-A1- FI20 110 149
- US-A1- 2007 173 169
- US-A1- 2020 018 658
- US-A1- 2020 316 434

## Description

### TECHNICAL FIELD

The present document relates to techniques for measuring and tracking activity of cabled-resistance strength training exercise machines.

### BACKGROUND

Health clubs and gyms employ many different types of strength training exercise machines, which are generally designed to improve the performance of various muscles of the human body. Such machines are often configured to move adjustable and non-adjustable resistive loads connected by a wire cable. More specifically, the machines may operate by providing resistance to muscle movement by means of pulling on a cable that is weighted by a selected number of individual weight units.

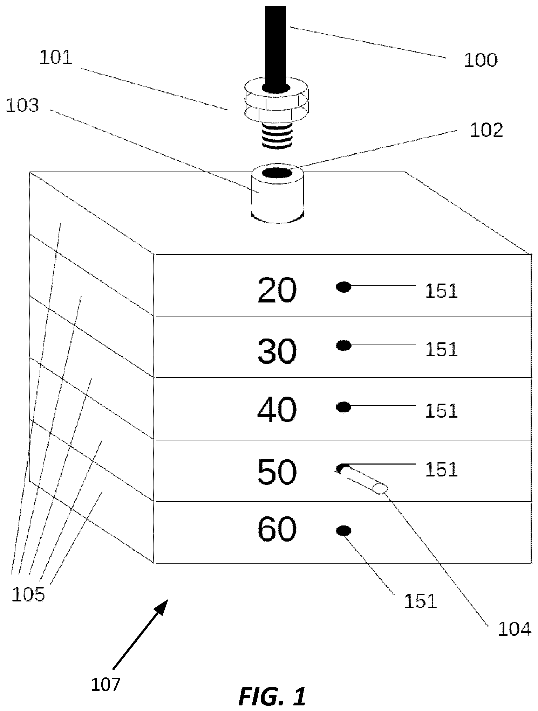

Referring now to Fig. 1, there is shown an example of such an arrangement, including a weight stack assembly 107 that is commonly used in many strength training exercise machines. The force of user muscle movement travels from an origination point on the machine that is in physical contact with the user (not shown in Fig. 1), then optionally through a pulley assembly (not shown in Fig. 1), to a resistive load such as weight stack assembly 107. The force originating from the user may be carried along by a steel cable 100 (which may be covered in plastic or some other material), or by any other suitable means.

A cable connector 101 may be provided, which attaches cable 100 to a bar connector 102 of a lifting bar 103. Lifting bar 103 may have horizontal holes 151 cut through it, each hole 151 adapted to receive a weight adjustment pin 104. The user may select a particular resistive load by inserting pin 104 in a particular hole 151, wherein different holes provide different resistive loads. For example, in Fig. 1, weight adjustment pin 104 is placed through hole 151 on the weight marked "50," which means the user will be picking up a total of 50 weight units (such as kg, lb, or the like), including the individual weight 105 pinned and all of the individual weights 105 above it, plus lifting bar 103 (which would normally weigh some multiple of weight 105). In the example of Fig. 1, the weight numbering indicates that lifting bar 103 constitutes approximately 10 weight units, as does each individual weight 105.

Once a weight is selected, a user may exercise by repeatedly raising and lowering the selected portion of weight stack assembly 107 by pulling on and then gently releasing an element (such as a bar or handle) that may be connected to cable 100.

Most health clubs leave it entirely to the users (or their trainers) to count repetitions ("reps") and to furnish their own personal exercise performance record-keeping means, while some health clubs provide file storage where their users can manually keep these records, such as the amount of weight, the number of reps performed (typically 8-12) and the number of sets of same ("sets," typically 1-3). Users (and/or their trainers) often have difficulty keeping track of the number of reps or sets of a given exercise they have performed, particularly when they are distracted. Accordingly, it may be difficult for users to maintain a consistent exercise program and to track progress, in view of the fact that their manual counts of exercises reps and sets may often be inaccurate.

In addition, in general, existing techniques for automatically measuring the size of a resistive load selected by the user can be inaccurate and/or cumbersome.

WO 2021/217767 describes a fitness display apparatus and a fitness counterweight apparatus. The fitness display apparatus comprises an outer housing provided on guide rails and capable of moving under the limit of the guide rails. A display screen is provided on the outer housing. The outer housing is internally provided with a generator, a PCB, a tension sensor and a rechargeable battery. The PCB is provided with a charging circuit and a control chip. The generator is connected to the rechargeable battery by means of the charging circuit. A rotor of the generator is in contact with the guide rails. When the outer housing moves, the rotor of the generator rotates. The rechargeable battery is electrically connected to the PCB, and the tension sensor and the display screen are respectively electrically connected to the PCB. The tension sensor is provided between an external device and a load bearing rod. By providing a display unit, exercise data can be intuitively displayed. Obtained data can be sent to a mobile device or a cloud by means of a wireless module, and an exercise process is accurately described in combination with a suitable APP and other software, laying a foundation for datamation of training processes and training effects.

ITFI20110149A1 describes a servo-assisted mechanical device for exercise machines used in the weightlifting sector that consists of the coupling of a mechanical system consisting of an electric motor, a clutch and a free wheel, a plurality of pulleys and a chain, and an electronic system, consisting of a pair of position transducers, a device for measuring the tractive effort or tensioning of the cable for lifting a stack of weights, equipped with a load cell, a device for measuring the engine revolutions, a monitor with push-button panel and a control unit or CPU. The servo-assisted electromechanical device thus constituted is able to apply to the cable, by means of said load cell, the force missing from the user of the exercise machine to lift the stack of weights.

US 2020/0018658 describes systems and methods for evaluating the performance of an athlete using a strain gauge. In some embodiments, the measurement system comprises a strain gauge and a central processing device. The strain gauge can include a power source, an inertial measurement unit ("IMU") comprising a load cell, a microcontroller, and a wireless communication module. The strain gauge can be configured to output strain data at a rate of at least 1 kHz and the central processing device can be configured to receive the strain data transmitted from the wireless communication module. In some embodiments, the measurement system includes a handle and a spool that houses a wire. The wire can be coupled to the handle, and the spool can be configured to retract the wire when tension is released from the wire.

US 2007/0173169 describes a block and a cord threaded through a bore formed within the block. The bore bears a crooked configuration such that when the cord is in a slack position, the block is displaceable along the cord. However, when the cord is taut it frictionally engages the block within the bore and restricts displacement of the block along the cord.

DE202018100743U1 describes a training device with a cable-pulley arrangement, in which a measuring device is inserted into the cable arrangement. The measuring device comprises a force-measuring device and an acceleration sensor. The measured force and acceleration values are transmitted to an external evaluation unit and used to derive training parameters, such as repetitions, work or power, pauses, sets and lifted weight.

### SUMMARY OF THE INVENTION

The invention is defined by the claims.

### OUTLINE OF THE DISCLOSURE

According to various embodiments, an apparatus may include a tension measurement device installed at some location along the tension linkage path of a cabled-resistance strength training exercise machine, to passively measure changes in tension along the linkage path. By detecting and interpreting such changes, the apparatus facilitates tracking of personal performance data without the need for the user to perform any record-keeping actions. Rather, such tracking can take place passively, i.e., without user action or involvement. For example, the system may count repetitions, as well as track user effort and ensure that the user is performing exercises properly, at an appropriate rate and with full range of motion.

According to various embodiments, various performance metrics of weight, reps, and sets, may be automatically produced, and may be further automatically augmented by metrics indicating an amount of effort, wherein such metrics may be measured and/or tracked automatically by the device and/or auxiliary equipment. Such metrics may be of high utility to users, particularly for those who are professional athletes and trainers, or those who may be recovering from an injury.

In at least one embodiment, the apparatus may provide branding, marketing, and physical resource monitoring advantages for the health club/gym. In at least one embodiment, the apparatus described herein may be designed to retrofit legacy cabled-weight and air-resistive strength training exercise machines.

Further details and variations are described herein.

### BRIEF DESCRIPTION OF THE DRAWINGS

The accompanying drawings, together with the description, illustrate several embodiments. One skilled in the art will recognize that the particular embodiments illustrated in the drawings are merely exemplary, and are not intended to limit scope.
Fig. 1 depicts an example of a weight stack assembly as is known in the art.
Fig. 2 depicts an example of a "lat pull-down" exercise machine, showing possible locations for installing a tension measurement device according to one embodiment.
Fig. 3 is a simplified illustration of an example of a tension measurement device according to one embodiment.
Fig. 4 is a block diagram depicting an example of a supporting system infrastructure for implementing the functionality described herein, according to one embodiment.
Fig. 5 depicts an example of a sample report that may be generated by the system described herein, according to one embodiment.
Fig. 6 is an interior cross-section diagram depicting an example of a device for removing cable slack ("loop slack reducer") that may be used in connection with the system described herein, according to one embodiment.
Fig. 7 is an assembled view of the loop slack reducer as depicted in Fig. 6.
Fig. 8 depicts an example of the shape of a cable path as forming a simple loop traversing through the loop slack reducer according to one embodiment.
Fig. 9 depicts an example of an alternative device for removing slack ("helical slack reducer"), preferable for smaller amounts of slack, according to one embodiment.
Fig. 10 depicts an example of the shape of a guided cable path within the helical slack reducer, according to one embodiment.
Fig. 11 depicts an example of a set of physical components representing a disassembled tension measurement device according to one embodiment.
Figs. 12A and 12B depict an arrangement before and after installation of a tension measurement device in a cabled weight stack machine, according to one embodiment.
Fig. 13 depicts an example of an arrangement whereby QR-code-based user authentication and exercise selection data can be collected and/or generated, according to one embodiment.
Fig. 14 is a dataflow diagram depicting a method of matching data arriving in two streams, including one stream received from machine(s) that are transmitting exercise data, and a second stream received from users who may assert the occupancy of machine(s), according to one embodiment.

### DETAILED DESCRIPTION OF THE EMBODIMENTS

As mentioned above, according to various embodiments, a tension measurement device may be installed at some location along the tension linkage path of an exercise machine such as a cabled-resistance strength training exercise machine. The device may measure tension at any point along the entire tension linkage path between the point on the machine where muscle movement is applied by the user, thence to the ultimate resistive load point, traveling through all cords, strings, cables, wires, rods, bars, weights, and/or the like (referred to collectively as "cables"), that bear tension in the transmission of force ("tension") between these two endpoints. In various embodiments, the device may directly measure and track this tension. Since tension equalizes though all components forming the tension linkage path, the tension measurement device may be located anywhere along the linkage between the point of force application and the resistive load point; the particular point of installation may thus be determined based on any suitable factor(s), such as ease of access, cosmetics, likelihood of tampering or damage, visibility, and/or the like.

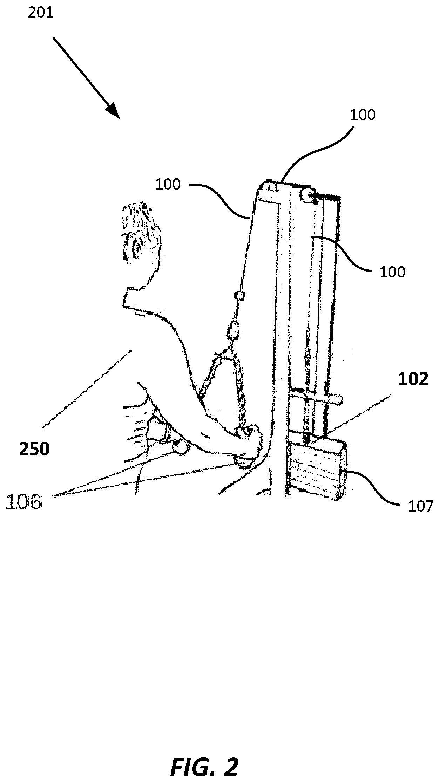

Referring now to Fig. 2, there is shown an example of a "lat pull-down" machine 201 in which a user 250 may exert force by pulling down a pair of handles 106. Tension may therefore be created along the entire tension linkage path from handles 106 to a resistive load, which in this case may be weight stack assembly 107. Potential locations for the tension measurement device described herein include any suitable position along the tension linkage path that starts with handles 106, passes through the ropes and connectors shown immediately above handles 106, then through cable 100 beyond that, and on through the lifting bar connector 102 on the weight stack assembly 107, as illustrated. This entire "cable tension linkage path" represents a continuous series of potential locations for installation of the tension measurement device according to various embodiments.

For many weight-stack machines such as machine 201, a locus just above bar connector 102 may be an example of one particularly suitable location for attaching the tension measurement device described herein, due to the ease of installation of the device at such a location. In at least one embodiment, the device may easily be inserted at such a point in just a few minutes using only a simple wrench, thus providing a convenient technique for retrofitting such a machine 201 and/or most other types of cabled weight machines.

### Tension Measuring Device

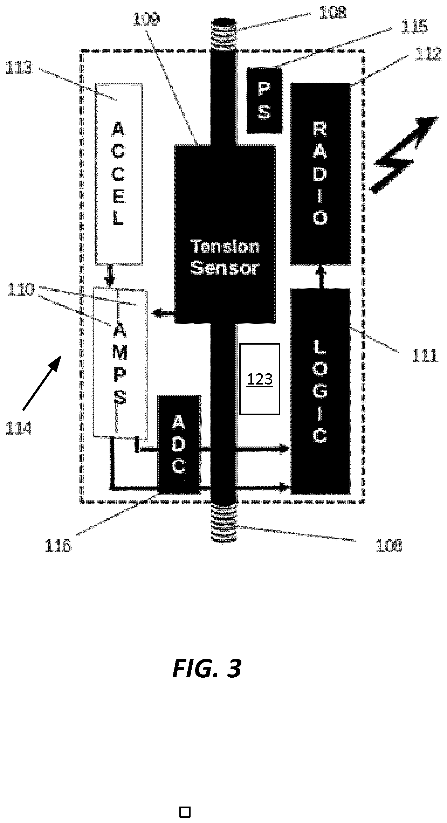

Referring now to Fig. 3, there is shown a simplified illustration of an example of an in-line tension measuring device 114 according to one embodiment, which may be configured to measure tension along cable 100. Device 114 includes a tension sensor 109 of sufficient rating to tolerate the maximum tension that may occur within the tension linkage path for the particular type of strength training exercise machine involved. As described above, in at least one embodiment, device 114 may be placed directly within the tension linkage path; therefore, rigid structural elements 108 with generic connectors (configured to host adapter connectors as needed) may be connected to the two ends of tension sensor 109, in order to preserve a continuous tension path through device 114. Cable 100 (not shown in Fig. 3) may be attached directly to elements 108, or it may be attached to other components that are in turn attached to elements 108.

In at least one embodiment, tension sensor 109 may provide, as output, an electrical signal. In at least one embodiment, an optional signal amplifier 110 may be provided, to amplify the electrical signal as needed. In at least one embodiment, the electrical signal may then be sent to an analog-to-digital converter (ADC) 116 and thence to a logic circuit 111 such as a micro-controller (MCU), micro-processor unit (MPU), or other logical computational unit. In at least one embodiment, logic circuit 111 may transform and store the digital tension data received from ADC 116 into digital tension time-series data. Such data may then be processed and sent, via any suitable communication means, to a supporting data processing infrastructure for further analysis and processing as described below.

Any suitable form of wired or wireless communication means may be used to transmit digital tension time-series data and/or summaries thereof. In the example embodiment depicted in Fig. 3, a wireless radio transceiver 112 is shown, which may operate using, for example, Bluetooth, WiFi, cellular, LoRa, and/or the like. Alternatively, a wired transmission mechanism (not shown) may be used, such as for example, Ethernet, serial cable, and/or the like. Wireless means may be preferable, since the tension path is in motion while in use, which may make it difficult to attach wired components in a manner that assures a reliable connection.

In at least one embodiment, device 114 may include an acceleration sensor 113 with optional amplifier 110, the signals of which follow a similar path into ADC 116, and thence to logic circuit 111, then forwarded to radio 112 for data transmission. In this manner, acceleration data concerning the motion of the movable components of the strength training exercise machine can be combined interactively with tension measurement ("sensor-fusion"), for improved and more accurate results, as well as to produce additional metrics, such as for example, effort.

In at least one embodiment, data may be stored at device 114 and transmitted in batches. Such storage may be accomplished using any suitable solid state or other storage device 123. In one embodiment, storage device 123 may be implemented as a microSD card or similar device(s) that may be used as temporary local storage so that long time-series of tension data may be reduced to relatively short and/or less frequent data transmissions, potentially lowering radio power requirements. Alternatively, storage device 123 may be omitted, for example when the logical unit 111 contains storage.

In at least one embodiment, power supply 115 may be provided, which may supply power to various components of device 114. Power supply 115 may be implemented as replaceable batteries, rechargeable batteries, an AC power source, and/or any other suitable power source.

In at least one embodiment, some or all elements of device 114 may be protected by a durable container or shell, which may be constructed of plastic, metal, wood, or any other suitable material.

According to various embodiments described herein, the described arrangement allows repetitions and sets to be easily recognized and automatically counted by device's 114 tension sensor 109 and/or acceleration sensor 113.

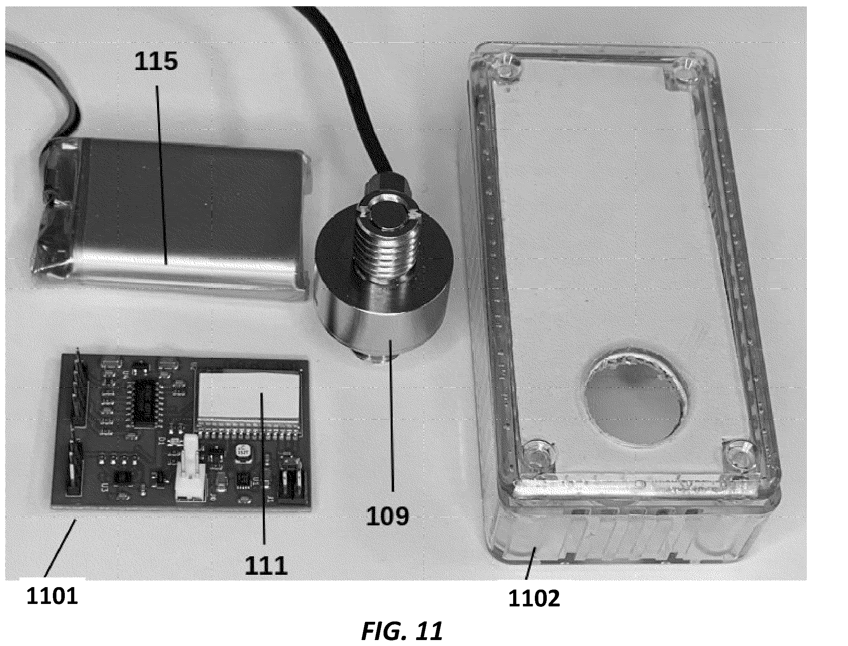

Referring now to Fig. 11, there is shown an image depicting an example of a set of physical components representing a disassembled tension measurement device 114 according to one embodiment.

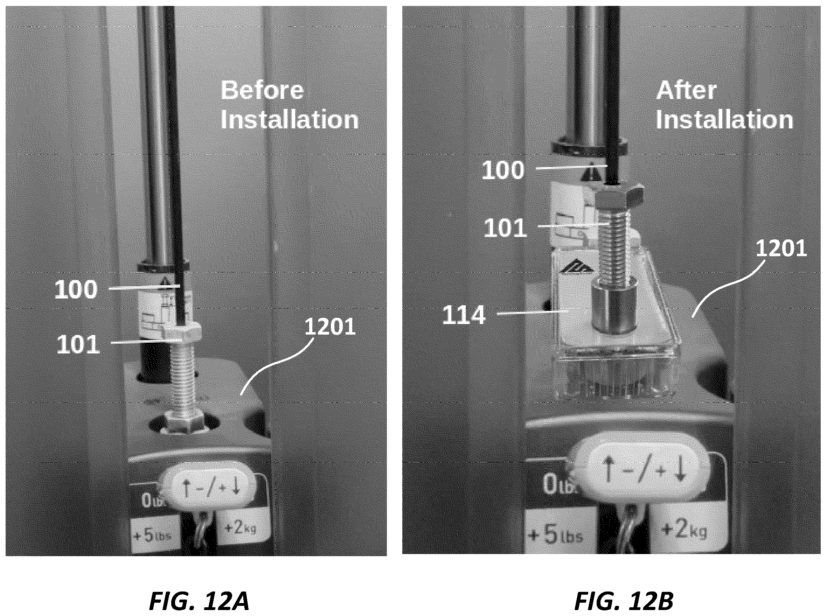

Referring to Figs. 12A and 12B, there is shown an arrangement before and after installation of tension measurement device 114 in a cabled weight stack machine (such as machine 201), according to one embodiment. Fig. 12A depicts the cabled weight stack before installation, wherein cable connector 101 connects cable 100 to component 1201 of the exercise machine (which may be a part of lifting bar 102). Fig. 12B depicts the cabled weight stack with device 114 installed in a preferred position, wherein cable connector 101 connects cable 100 to device 114, which in turn is attached to component 1201.

### Operation with Air-Resistive Machine

In at least one embodiment, device 114 may be configured to operate with many different types of strength training exercise machines. For example, it may operate in connection with air-resistive machines. The cable tension path of an air-resistive machine is similar to weight-stack machines at the user end, but may be more complicated at the resistive load end, where it uses a different connection type. This may include, for example, a spindle that winds cable upon the termination of a repetition, and unwinds it with negative torque (creating resistive load) when user 250 applies force. Thus, in such an arrangement, device 114 might be most conveniently mounted near the user-side endpoint, whereas on a weight-stack machine, it may typically be more convenient to mount it at the resistive load end. On the other hand, the spindle is within the tension linkage path, and allowing for an arrangement wherein a torque sensor is substituted for tension sensor 109; device 114 may then be mounted on the spindle itself (in-line and connected to its axle) and to a rigid portion of the machine frame. In this context, the axle torque becomes a natural and accurate proxy for cable tension.

### Supporting System Infrastructure

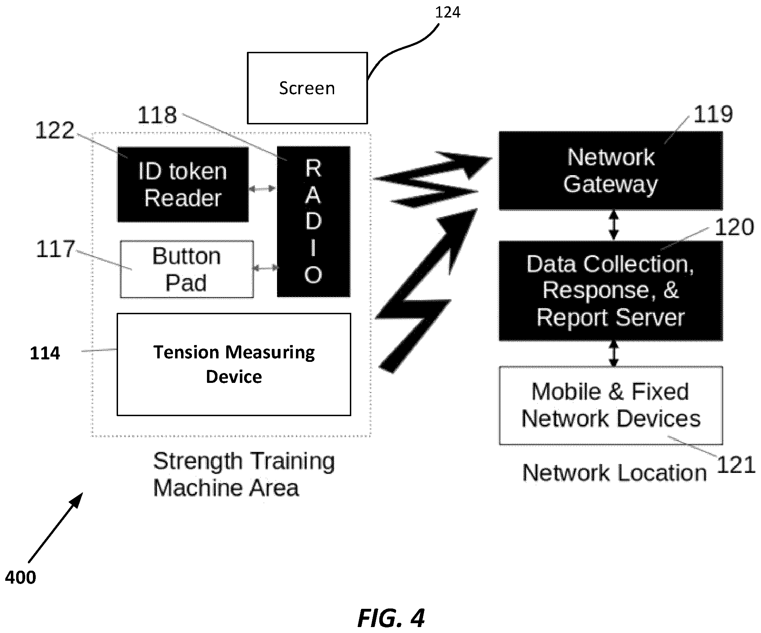

Referring now to Fig. 4, there is shown a block diagram depicting an example of a supporting system infrastructure 400 for implementing the functionality described herein, according to one embodiment. In at least one embodiment, infrastructure 400 may include various components that support the capture and use of in-line tension and/or acceleration sensor data.

In at least one embodiment, device 114, as described above, may automatically and passively generate and transmit data describing tension (and/or torque/acceleration), weight, reps, sets, and related exercise metrics. In at least one embodiment, such data may then be associated with an identified specific user, machine, and/or time, so as to increase its usefulness and to provide greater insight.

Various other components depicted in Fig. 4 may support data collection, processing, and report generation, as follows.

ID token reader 122 may perform user identification via any suitable method, such as for example by the use of a physical token reader. In this context, a "token" may refer to any digital element for uniquely denoting a user 250. Examples include a QR code or bar code on a mobile phone or printout, a number typed into a keyboard, a mobile phone number, a smartphone app's internal ID, facial recognition, or any other of a variety of methods and encodings. One token method may be implemented using NFC ("near field communication") tags such as those provided by many health clubs to their members, for purposes of client identification at entry or check-in points. Alternatively, the system may use an NFC tag such as those used in conjunction with NFC tag readers that are incorporated into many console-type walking and/or elliptical machines. Thus, NFC tags and readers represent one natural choice to illustrate effective user ID-tokens and readers. To provide convenient and exact identification of a machine user, the token reader may be mounted directly upon, or well within reach, of each machine used, thus also identifying the specific machine. In yet another embodiment, facial recognition, fingerprint reading, and/or other biometric techniques may be used to identify a user and associate the user's data with the measurements performed by the described system.

One preferred instance of token-based user authentication may arise in contexts where most users bring their smartphone to the gym. This context permits users to scan a particular exercise-plus-machine QR code or bar code affixed or near to a specific cabled-resistance machine, with their smartphone or other device. In this instance, an app installed on the smartphone or other device may then immediately transmit any or all of: (1) a user authentication token, (2) the machine ID, and/or (3) the user's exercise choice directly to central server 120. Such an arrangement may save the user's time by comprehensively providing all user data simultaneously, instead of sequentially, particularly when multiple exercises may be performed on the same machine.

The system may also include radio component 118 to enable wireless communication between device 114 and central server 120, via network gateway 119. In at least one embodiment, radio component 118 may be implemented as a low-power LoRa ("Long Range") radio, thus providing longer battery life.

Alternatively, a wired data connection may be used, although such an approach may be less convenient. Any suitable wireless or wired protocol may be used, including those described above. Wireless network gateway 119 may also be used to collect such radio transmissions. Although it may be most convenient to employ the same protocol in gateway 119 as is used by device 114 as described above, differing protocols may be used and, if necessary, multiple gateway types may be provided.

An optional button key device, such as button pad 117, may be included. Button pad 117 may include a number of buttons that can be activated by user 250 to provide control information (as well as perhaps user ID-tokens). For example, user 250 may press a button to indicate the start or termination of an exercise, type of exercise, and/or the like, clarifying the attribution of exercise data to the appropriate user beyond what may be possible using simple time-outs. Button pad 117 can also include visual and/or auditory output indicator(s) such as LED lights, speakers, or the like, to provide feedback information indicating, for example, the imminent termination of a set due to a pending time-out, the selection of an exercise type on a multi-exercise machine, or user 250 failure to provide an ID-token before commencing exercise. Instead of (or in addition to) such output indicator(s), an output device such as screen 124 may be included, to provide additional feedback to user 250. For example, screen 124 may suggest a recommended weight, based upon user 250 identification and that user's history on the machine, e.g. "Try 3 x 12 @ 55-6olb." In at least one embodiment, button pad 117 (including associated output indicator(s)) and/or screen 124 may be mounted locally to or proximate to exercise machine, so that it is readily and visually available to user 250. In at least one embodiment, button pad 117 (including associated output indicator(s)) and/or screen 124 may be physically and/or electronically connected to ID token reader 122 and/or to other components of infrastructure 400. Alternatively or additionally, an app may be provided on the user's smartphone, smart watch, or other device, and may be used as a general-purpose input/output device in connection with the techniques described herein. Such an arrangement is particularly useful in contexts where users habitually bring their smartphones and/or other devices to the gym.

In at least one embodiment, network gateway 119 is responsible for receiving data from a strength training exercise machine that includes tension measuring device 114.

In at least one embodiment, data collection, response, and report server 120 (or cluster of servers) may be provided as part of a gateway network, to manage the receiving of data. Server 120 may also send responses back to the originating devices, store, collate and retrieve data, and/or prepare and distribute reports to users 250, medical professionals, trainers, and/or health clubs managers as desired. In various embodiments, any suitable means may be used for transmission of such messages, including for example SMS text, email, telephone, app notifications, and/or the like. Depending upon response latencies, server 120 may be located on a local area network (LAN), or in the cloud, or possibly both. In at least one embodiment, a small local calculation server connected to a larger cloud server may be a desirable approach, due to the real-time nature of data collection versus the demands of large-scale data archiving and collation.

In at least one embodiment, server 120 may use collected data to provide a real-time count of repetitions and/or sets, which may be displayed on a display device proximate to the exercise machine, such as screen 124, or may be transmitted to user's 250 device such as a smartphone, smart watch, or the like. In addition or alternatively, the real-time count may be output in the form of audio output (such as beeps and/or spoken output), haptic output (such as vibrations or "taps" on a smartphone or smart watch), and/or any combination thereof. In at least one embodiment, user 250 may select the type of real-time output that may be provided, and the manner in which it is provided, to help track repetitions and/or sets.

In at least one embodiment, server 120 may also prepare and send reports to users via mobile and/or fixed devices 121 (such as cell phones, computers, wearable devices such as smart watches, and/or the like) and/or to a machine-local visual display in real-time (or near-real-time), or immediately post-exercise. Server 120 may also automatically provide alerts to inform health club managers in real-time (or near-real-time) about machine usage and maintenance status delivered on their LAN (local area network) workstation or mobile computers 121.

Such reports may indicate, for example, the number of repetitions and/or sets performed, and may be displayed, printed, and/or stored as desired. In at least one embodiment, such reports may be transmitted to off-site storage such as server 120, and/or any other form of cloud storage for later retrieval and use. Reports may be retrieved and viewed by user 250, as well as optionally by a medical professional, trainer, and/or other interested individual, for example to ensure that user 250 is adhering to a prescribed exercise program, and/or that progress is being made. Reports may be time- and date-stamped if desired, using current time and date that may be obtained via any suitable means, such as for example Network Time Protocol (NTP).

One skilled in the art will recognize that the various components depicted in Fig. 4 are exemplary. In alternative embodiments, some of the components may be omitted or may be arranged differently. For example, in at least one alternative embodiment, data collected by tension measuring device 114 may be used to provide real-time feedback and/or reporting of repetitions and/or sets performed, and such feedback and/or reporting may be provided via screen 124 (and/or other visual, audio, and/or haptic output devices), without using a network connection or server. For example, data collected by tension measuring device 114 may be used to generate beeps, spoken output, and/or visual indications of the number of repetitions and/or sets performed, without transmitting or storing such information via a network or other means. In at least one embodiment, a local wireless communication link may be established to allow such feedback (whether visual, auditory, and/or haptic) to be output on user's 250 cell phone, watch, and/or other portable or wearable device.

### Tension Measurement Methodology

In at least one embodiment, device 114 operates by measuring linkage tension along cable 100. Such measurement is not quite the same as measuring the weight of weight stack assembly 107. For strength machines employing weight stacks such as assembly 107, while weight stack assembly 107 is at rest, the tension may be at a baseline level near zero, independent of stack weight. When weight stack assembly 107 is not at rest, the relationship between tension T and weight W may be given approximately by the formula $T = W + AW + R$ (Equation 1) where A is the acceleration of weight stack assembly 107 and R is the dynamic frictional resistance (the latter usually being small, due to pulley quality and slippery plastic cable coatings.) If weight stack assembly 107 at rest, the tension T may be at a baseline value close to zero. Thus, the beginning of a new set (when weight stack assembly 107 is picked up) may be marked by the sudden transition from a baseline T to the higher formula value shown above. Initial acceleration A must be positive in order to get the weight stack started in motion, and if user 250 exerts more additional force, the A value may become even larger. Thus, tension may initially exceed weight early in a repetition. When weight stack assembly 107 becomes maximally raised, the acceleration may turn negative; therefore, tension may become smaller than weight at this point. A repetition may therefore be approximately marked by a cyclical pattern in tension value T over time.

Sets, in turn, may be measured by establishing timeouts involving intervals between reps. Beyond these, novel tension-based metrics of work performed become possible, as described in more detail below.

This distinction between weight and tension has at least two implications:
- New metrics may be introduced by tension (as opposed to weight) measurement, and can more accurately reflect actual user work performed than the nominal weight does, and therefore may be of additional interest to serious athletes and their trainers.
- Traditional metrics involving the nominal weight may continue to be of independent interest to users. Therefore, it becomes advantageous to understand the relationship between tension and weight during the repetition cycle, for a variety of resistive load types and different types of strength training exercise machines.

As is clear from the formula in Equation 1, the additional measurement of acceleration A may improve the inference of weight W, and may refine the detection of a repetition cycle. On the other hand, tension T may reflect the same cyclic nature as acceleration A in some machines or settings. Correspondingly, in at least one embodiment, the device may optionally measure tension path acceleration in addition to physical tension along the tension linkage path as described above.

However, one skilled in the art will recognize that the use of acceleration data is optional, and that the described system and method can also be implemented using tension measurement alone, without acceleration measurement or data. For example, tension data alone may be used in a circumstance where resistance R is near-constant and near-zero in Equation 1. Since acceleration (A) moves from positive and negative in each cycle, it may be possible to infer the value of W as approximately the midpoint of the samples of T, and variations from midpoint as due to acceleration A. Although such an approach may be used in some situations, the use of acceleration data may contribute to more accurate measurements.

In at least one embodiment, the system may include sensor-fusion functionality to cause tension sensor 109 to sleep while acceleration sensor 113 runs continuously. Such functionality may be implemented, for example, via MCU interrupt circuitry or the like. Acceleration sensor 113 may be configured to wake tension sensor 109 when a motion event is detected. In this manner, power savings can be achieved, since tension sensors may often use significantly more power than acceleration sensors do.

Air-resistive machines do not normally employ weight stacks, but instead rely on air friction (normally via fans) to generate their resistive loads. Equation 1 still applies, but now W is close to zero, and R is the main contributor to load. Moreover, the R factor now becomes variable, changing with fan speed. This means that there is no metric corresponding to nominal weight W available (as in "How many pounds did I lift?") in air-resistive machines, unlike weight-stack machines, but the reps/sets metrics remain meaningful. Accordingly, the device described herein provides unique advantages, when placed in the air-resistive machine's cable tension path, since it can create, and together with the system described herein, record, collate, assemble, and distribute meaningful data on user performance based upon tension metrics.

### Method For Calculation Of Tension-Based Work Metrics

The physics definition of work is the applied force F multiplied by the distance d over which the force is applied, that is, **work** = F x **d.** For purposes of the description herein, work is considered equivalent to effort and is assigned the symbol "E". In a health club setting, effort is sometimes measured on some types of console-based walking, elliptical, and rowing machines (often expressed as "calories burned"). Conventionally, however, there exists no corresponding commonly used work/effort metric availability on cabled-resistance machines beyond traditional self-recording of weight, reps, and sets. According to various embodiments, tension measurement device 114 described herein enables generation of such metrics.

As described herein, device 114 and supporting system infrastructure 400 may provide mechanisms for creating work metrics that: (1) reproduce traditional metrics of nominal weight, reps, and sets; and (2) with sensor fusion, add highly precise metrics for work performed, i.e. effort, and further improve estimates of nominal weight and force. In at least one embodiment, all such metrics may be created automatically with minimal (or no) user involvement. For many users such as for example serious athletes, the described system therefore offers the potential of a much more precise gym-work-performed measurement with a minimum of record keeping.

Professional athletes and their trainers and coaches are often concerned with how much work the athlete can do in a short unit of time, that is, mechanical power. For example, a professional football athlete must expend large amounts of effort in a few seconds of time. Accordingly, the effort expended in the gym may not translate to performance on the field, and mechanical power is likely a superior metric for the latter. By capturing the time interval required to complete a set of an exercise, device 114 may provide a measurement of the mechanical power produced on a cabled-resistance machine.

In at least one embodiment, using data generated by device 114, the system may automatically analyze acceleration positive-negative cycles as described above to ascertain the number of repetitions and/or sets that have been performed. In at least one embodiment, such determination can be directly accomplished using data collected by acceleration sensor 113. Alternatively, depending upon the relative constancy of various machines' dynamic resistance factor R, the system may be able to automatically infer reps indirectly from variations in tension T(t) as explained above, providing circumstances where the optional acceleration sensor 113 can be omitted. Sets may be assessed as commencing when tension first rises from its normal baseline, and deemed terminated when (a) tension returns to baseline and remains there for at least a timeout period, (b) user 250 "signs off" the machine via button press, app, or other means, or (c) a new user "signs on" (presents a token) to the server 120. In the latter two cases, the count of sets may also be deemed terminated. Defining "inactivity" as the machine cable tension remaining at a baseline level, or in a sensor-fusion device, the accelerometer showing near-zero acceleration for a prolonged period of time, three timeout periods may be established, wherein T₁ < T₂ < T₃, and T₁ represents the inactivity period to count a repetition, T₂ represents the period to count a set, and T₃ represents the time at which current user 250 is deemed disassociated with the machine.

In a tension-sensor-only embodiment of device 114, the nominal weight of the weight-stack assembly may be roughly determined from Equation 1, using time-series data as described below to estimate W, and optionally rounding this to the nearest weight-stack nominal denotation. In this regard, variation in R may also be estimated to notify health club managers (and/or other personnel) of a significant change in cable resistance indicating a possible maintenance problem.

In a sensor-fusion embodiment of device 114, a preferred methodology may be to additionally incorporate tension baseline to more precisely measure nominal weight and force.

The simple form of the "work" definition described above assumes constant force F and fixed distance d. In actual operation, however, such an assumption may not hold when measuring work for exercises on a cabled-resistance strength training exercise machine. For example, a single repetition may typically take 1-3 seconds, during which force and distance may vary. In Equation 1, tension T (as adjusted for baseline tension) closely represents the actual force applied by user 250, but since this force may vary during the course of the repetition, it may be treated instead as a function of time t, i.e. T(t). Moreover, it is understood that distance covered in a rep may vary with user's 250 arm or leg length, as well as whether they choose to employ maximal extension of such limbs. By measuring acceleration via acceleration sensor 113, velocity V(t) can be computed from acceleration A(t) by approximating the classical theoretical formula $V \left(t\right) = {\int }_{0}^{t} A \left(s\right) ds$ (Equation 2) with its discrete-sampling analogue $V \left(t\right) = {\sum }_{0}^{N} A \left(i\right) \div N$ (Equation 3) where t=0 is time at which the tension departs from its baseline value (weights are picked up) to the end of the rep (or set, as described above), and where the time interval [o,t] is divided into N equal time sub-intervals, and A(i) is the i-th sampling from acceleration sensor 113. In practical terms, given a 1-3 second rep time, a reasonable sampling sub-interval is likely to be in the range of 10 milliseconds to 100 milliseconds. This means an entire set of 12 reps may be contained in a time series of less than a thousand floating-point numbers, easily within the range of modern data-logging microchips, indicating that it may be entirely feasible to conduct both storage and computation locally within device 114, thus saving battery power in transmission. Accordingly, in at least one embodiment, the system may perform storage and computation locally within device 114, for example by performing computation on logic circuit 111 and storing data in local storage device 123.

From the velocity V(t) calculation, a precise effort metric can be calculated, expressed theoretically as $E = {\int }_{o}^{t} \left|V\left(t\right)\right| T \left(t\right) dt$ (Equation 4) by computing and storing all of the partial sums in the approximation of Equation 3, that is, $V \left(j\right) = {\sum }_{0}^{j} A \left(i\right) \div j$ (Equation 5) and then computing the approximation of effort as $E = t {\sum }_{0}^{N} \left|V\left(j\right)\right| T \left(j\right) \div N$ (Equation 6)

In the described application, the absolute value of velocity may be used because velocity is in one dimension (along the axis of the tension linkage cable); both the up-movement and down-movement of a weight-stack require user effort, since user 250 typically releases weights gently. On air-resistance machines, negative velocities can be instead simply treated as zeroes, since fan release involves approximately zero effort as the spring-loaded spindle provides the force to rewind the cable.

### Benefits

As described above, processed data can be used for real-time applications (such as generating and outputting a real-time count of reps and/or sets), and for non-real-time applications (such as generating reports of exercises performed by user 250 and/or a set of users 250). Reports based on metrics derived from analysis of tension-path-sourced data may be useful in many contexts, and may be provided to users 250, medical professionals, trainers, gym owners/managers, maintenance personnel, professional athletes and sports teams, physiologists, and/or the like.

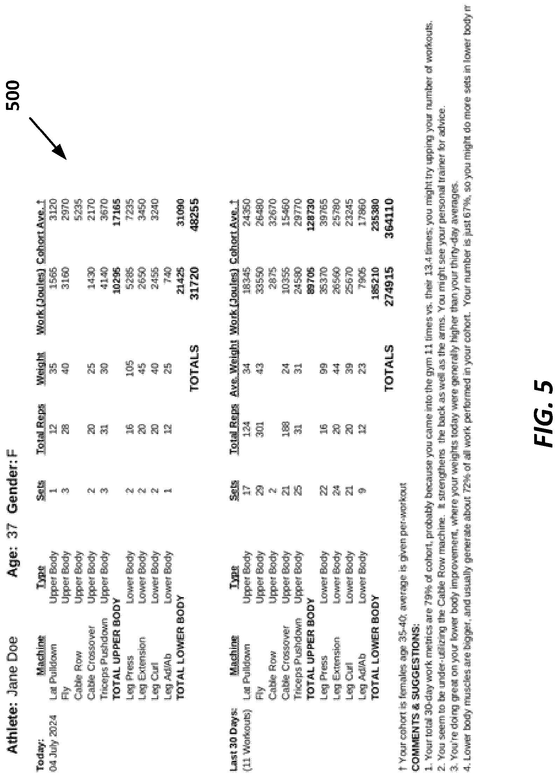

Referring now to Fig. 5, there is shown an example of a sample report 500 that may be generated by the system described herein, illustrating the potential benefits to normal gym users, wherein the work-performed statistics are tracked and reported, providing actionable guidance and motivation.

Example report 500 illustrates the utility of tension-based metrics as may be generated using the system and method described herein. Example report 500 includes work-performed data for an individual user workout that involved a variety of cabled-resistance machines. It summarizes the results of today's workout and then provides a comparison to user's 250 thirty-day average of workouts. It also shows a work-performed comparison with user's 250 "cohort group," as classified by age and sex, summarizing anonymous data from other users. The cohorts may also be classified by other criteria, for example, by body weight, height, self-rated health, and/or the like. From the basic data, secondary metrics may be usefully constructed. For example, in example report 500, the ratio of lower-body work to total work provides guidance on user's 250 balance between use of upper-body vs. lower-body machines. On multi-cabled machines such as the Crossover Arm machine, where two cables and two weight stacks are employed, one per arm, ratios of right-arm to left-arm symmetry of the work-performed may also prove useful.

Example report 500 also includes a comments/suggestions section, where artificial intelligence / large language models (AI/LLM) can be applied to analyze possible reasons for under-performance and to suggest improvements as well as corrective and/or encouraging advice. AI/LLM is a natural fit, due to the very large amounts of tension-based data generated by device 114 upon which to train these models. In other embodiments, more advantages can be gained by linking gym work-performed metrics to other data sourced from the individual users, for medical, scientific, physiologic, team sport, and other purposes.

One skilled in the art will recognize that the particular layout and content of example report 500 is merely illustrative, and that reports generated by the system described herein may take any other suitable form and may include other data.

### Auxiliary Field Installation Devices

In at least one embodiment, device 114 as depicted in Fig. 3 may be between 20mm and 80mm in height, although it may alternatively be of any other suitable size. When inserted into the tension path of a cabled-resistance strength training exercise machine, device 114 may introduce the equivalent length of slack in cable 100. Many cabled-resistance machines may be minimally affected by introduction of this slack, including for example a lat pull-down machine as depicted in Fig. 2, and most air-resistive machines.

However, in some machines, cable slack may be detrimental to proper operation. To address this issue, in at least one embodiment, cable 100 may be re-cut and re-terminated. However, such an approach may require special tools, and may take time. Furthermore, such an approach is generally irreversible, meaning that a temporary demonstration of the device may require an entire cable replacement.

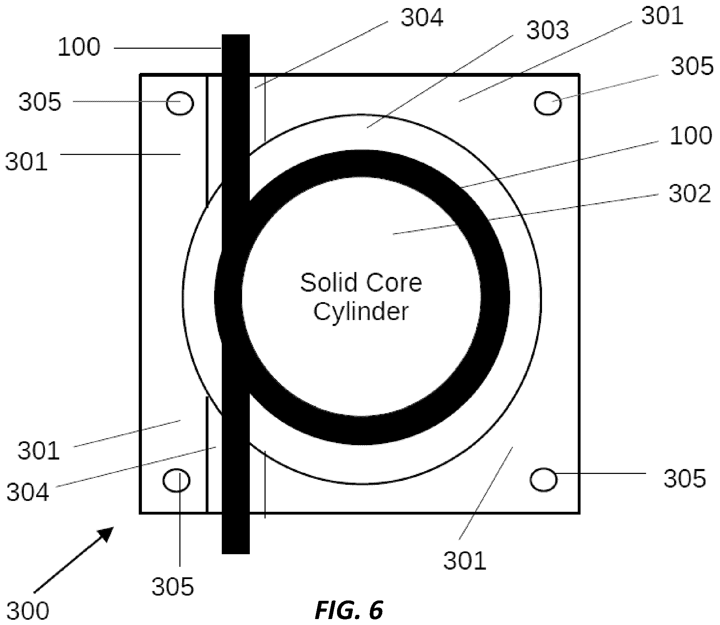

A mechanism for field installation is provided that removes or reduces cable slack after or during installation of device 114. Referring now to Fig. 6, there is shown an interior cross-section diagram depicting a device 300 for removing cable slack that may be used in connection with device 114 depicted herein. In at least one embodiment, device 300 ("loop slack reducer") may wind excess cable 100 around a solid core cylinder 302 that may be positioned within a housing block 301. In at least one embodiment, cylinder 302 and housing block 301 may both be fabricated of strong material such as polycarbonate or aluminum. In at least one embodiment, cylinder 302 may be integral to one side of block 301, with complementary receiving space on the other side, although other arrangements are possible.

Two holes 304 may allow co-linear channels for entry and exit of cable 100. Channel 303 may be cut out of block 301 to allow passage of multiple loops of cable 100 around cylinder 302.

In at least one embodiment, block 301 may be cut in half (possibly excepting cylinder 302) along the plane of the cross-section depicted in Fig. 6, to allow for the winding of cable 100 without any disassembly of the cabled-weight machine. After winding the appropriate number of loops of cable 100, the two halves of block 301 may then be reconnected with one another, using a fastening device such as screws 305 or the like.

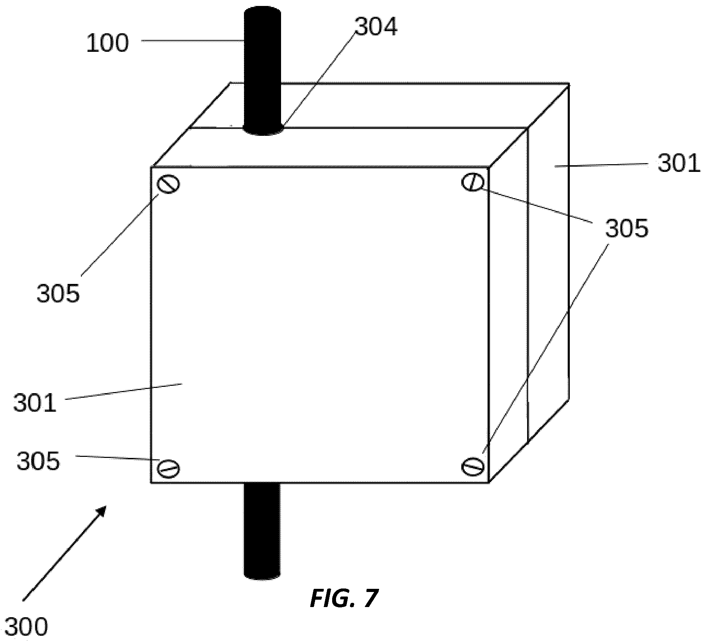

Referring now to Fig. 7, there is shown an assembled view of loop slack reducer 300 as depicted in Fig. 6.

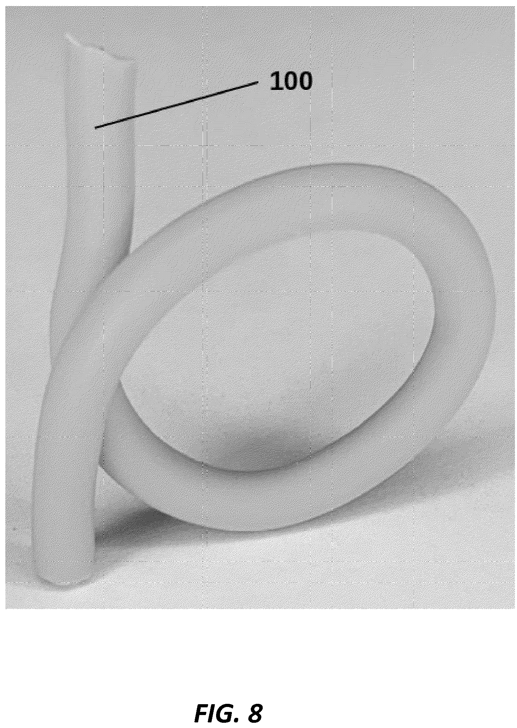

Referring now to Fig. 8, there is shown an example of the shape of a path for cable 100 as forming a simple loop traversing through the interior of loop slack reducer 300 according to one embodiment.

Loop slack reducer 300 may provide several advantages, as follows:
- It may remove or reduce cable slack in multiples of the circumference of the interior cylinder;
- It may maintain the linearity of the cable path;
- It may be installed in any convenient location on cable 100, and need not be close to device 114;
- It may be fabricated in multiple circumferences of cylinder size for various circumstances; and
- It need not be destructive of cabling, providing for either temporary or long-term use.

In some cases, cables used in cabled-weight exercise machines may be constructed from stranded steel, which may have a limited bending radius depending on cable width. Therefore, for 3mm or wider cable, cylinder 302 diameters under 30mm may not be suitable, meaning that loop slack reducer 300 may have best application when slack exceeds 90mm to 100mm.

One skilled in the art will recognize that other variations and features are possible.

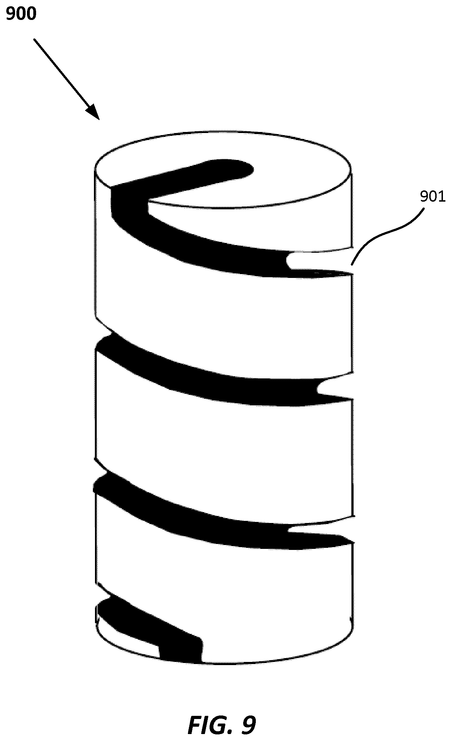

Referring now to Fig. 9 depicts an example of an alternative device 900 for removing slack ("helical slack reducer"), preferable for smaller amounts of slack, according to one embodiment. In at least one embodiment, such a device 900 may be used, for example, if the slack to be removed is smaller than 80-90mm.

As shown, helical slack reducer 900 may be constructed from a cylinder of solid material such as described in connection with loop slack reducer 300, with a cut-out cavity or groove 901 that provides a substantially helically shaped cable path. Helical slack reducer 900 may be formed, for example, by being carved by a milling machine with a ball-end bit slightly larger than the diameter of the cable, held with the bit perpendicular to the cylinder axis. An initial cut may be made into one end with the ball-end centered on the cylinder axis (to maintain centered, co-linear entry and exit points for the cable), thence proceeding to cut a substantially helical shape around and into the cylinder, raising the bit away from the cylinder axis constantly (but never so far that the cable might be made to emerge) until reaching near the point equidistant from both ends of the cylinder. The cutting process then continues the same helix, but lowering the bit in the same fashion as when raised, until reaching the far end, where the ball-end again becomes centered on the axis for co-linearity proposes. One skilled in the art will recognize that the described construction technique is merely exemplary, and that helical slack reducer 900 can be constructed in other ways and using other methods.

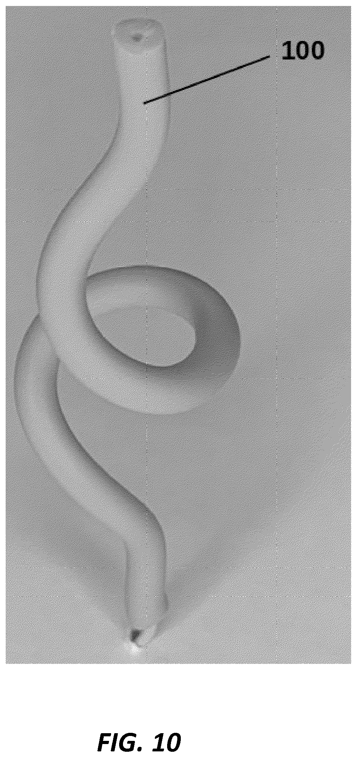

Referring now to Fig. 10, there is shown an example of a shape of cable 100 traversing within helical slack reducer 900, as a substantially helical form widening within the middle portion and diminishing at the two ends, according to one embodiment. This shape may serve to maximize the minimum cable bend radius.

In at least one embodiment, helical slack reducer 900 may be installed by winding cable 100 into cut-out cavity 901; neither end of cable 100 is required to be detached for installation. Such an arrangement may remain stable in such an installation; however, if further security of the installation is important, a sleeve (not shown) of slightly larger diameter, and of substantially the same length, as the cylinder may optionally be used to cover helical slack reducer 900. Such a sleeve may be constructed of metal or any other suitable material. In such an arrangement, the interior diameter of the sleeve may be configured to exceed the largest diameter of cable connector 101, since cable connector 101 must be passed through the sleeve, absent cable disassembly. Optionally, the sleeve may be further secured to helical slack reducer 900 by a fastener such as a screw.

### Mapping Users to Detected Machine Activity

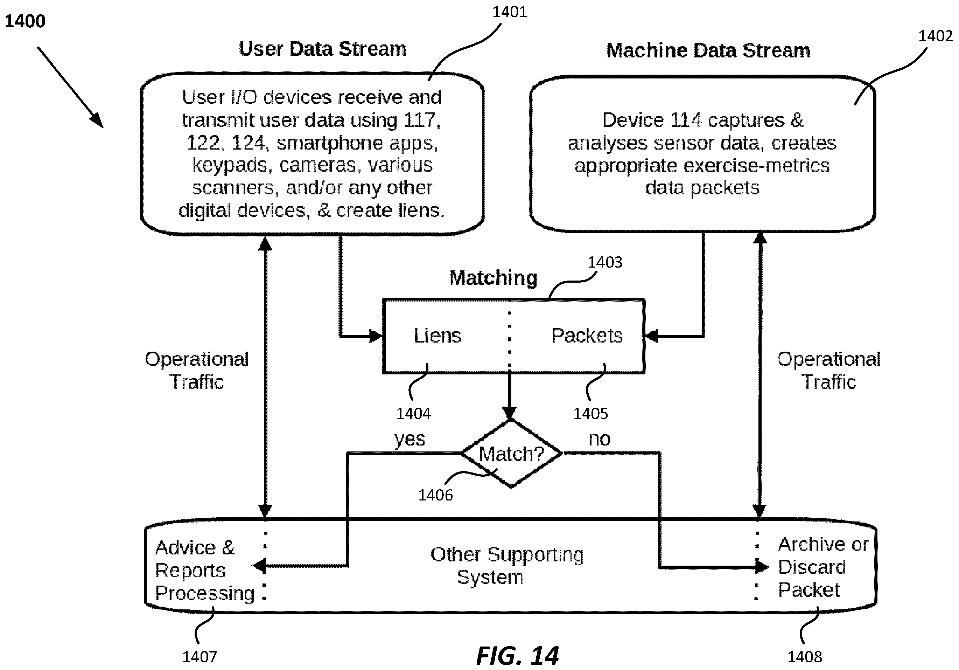

Referring now to Fig. 14, there is shown a dataflow diagram depicting a method 1400 of matching data arriving in two streams, including one stream received from machine(s) that are transmitting exercise data, and a second stream received from users who may assert the occupancy of machine(s), according to one embodiment. Method 1400 allows two separate data streams to be combined to associate users 250 with activities that may be detected automatically on gym machines.

In step 1402, device 114 captures a stream of data based on detected activity on a cabled-resistance machine ("machine data stream"), and transmits such data to server 120. In at least one embodiment, the machine data stream may include a number of packets 1405 representing various time-contiguous (i.e. continuous real-time) batches of data. Such packets 1405 may be defined, for example, so as to be suitable for forming database records for storage at a data storage device associated with server 120.

In at least one embodiment, each machine stream data packet 1405 may be defined in any of a variety of ways, including for example: as a summary of a single repetition, a summary of a set of repetitions, a complete time series of all sensor values for two consecutive reps of a set, and/or any other time-continuous aggregation. For database-hosted matching of the stream of packets 1405, it may be preferable for each packet 1405 to be associated with a particular user. For this reason, in at least one embodiment, machine stream packets 1405 may be configured to represent summaries of sets, time series of sensor data for a set, or other set-related packet, since each set may have the largest time period that may be reasonably expected to be associated with only one user.

In step 1401, one or more devices (such as a smartphone, smart watch, camera, tablet, or the like) may capture user data representing user interaction with one or more exercise machines. Such user data may include, for example, user identification and/or exercise type identification. Such user data may be provided in the form of a data stream, referred to as a "user data stream", which may include a number of database records referred to as liens 1404, each of which may assert a particular user's 250 current occupancy of a particular machine. Identification of specific users 250 associated with individual liens 1404 may be accomplished via any suitable means, such as via any of the following:
- token reader 122;
- button pad 117;
- smartphone app;
- touchscreen, QR and/or bar codes;
- ID card scanner;
- NFC and/or other tokens;
- keyboard;
- biometrics such as facial, fingerprint, and/or retinal identification;
- camera-based body motion tracking; and/or
- other user identification and/or exercise tracking methods and devices.

In at least one embodiment, users 250 who are already registered in a smartphone app may scan a QR code containing both the machine and exercise type(s) at once, the app adding the user ID, then immediately sending data items representing machine, user, and exercise type to be encoded within the user data stream.

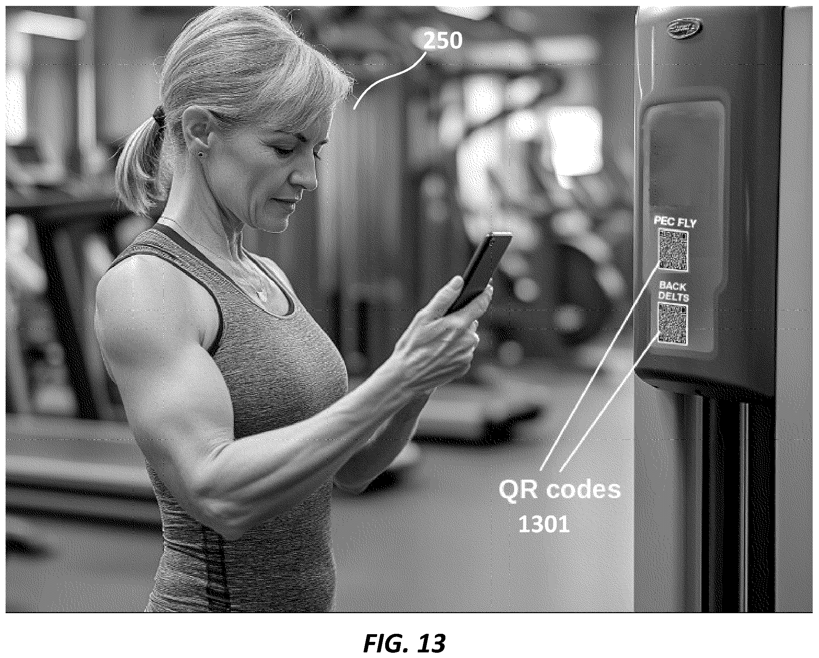

Referring now briefly to Fig. 13, there is shown an example of an arrangement whereby QR-code-based user authentication and exercise selection data can be collected and/or generated, according to one embodiment. User 250 is scanning one of two QR codes 1301 mounted on an exercise machine, such as the "pec fly" machine, which supports two chest exercises, including one facing forward and one facing backward. In at least one embodiment, each QR code 1301 may contain the same machine ID but different exercise type IDs.

Referring again to Fig. 14, in at least one embodiment, step 1403 is performed, to match liens 1404 with data packets 1405, by assigning each packet 1405 of the machine data stream to a user ID and an exercise ID associated with a lien 1404.

In step 1406, a determination may be made as to whether a match was successfully determined. If a match is made, step 1407 may be performed, wherein the matching data is sent to advice and reports processing 1407 for generation of reports and for further tracking.

In at least one embodiment, if no user ID is assigned to a packet 1405, then, in step 1408, the packet 1405 may be designated as an orphan, and may be archived or discarded. Orphan packets may not support individual user feedback; however, they may be useful for general research purposes or machine usage analysis.

In at least one embodiment, if a packet is assigned a user ID but no exercise ID, it may be deemed a partial match. Such a partial match may support individual user feedback for reps, sets, and work metrics, but may not necessarily support muscle-group analysis unless the machine has only one possible exercise type.

Any suitable means may be used for assigning exercise types. For example, in at least one embodiment, user 250 may select an exercise type via any suitable input mechanism such as via button pad 117, within a smartphone app, by QR code, and/or the like. In at least one embodiment, an exercise machine may support only a limited number of exercises; validity checks of exercise type may be used to avoid invalid data.

In at least one embodiment, a match of machine may be achieved by pre-configuring device 114 and devices that perform user and exercise identification. For example, any one of the following techniques may be used for establishing a match of machine to user 250:
- Device 114 may transmit a unique ID code to facilitate a database lookup to determine which machine it is installed upon;
- A camera-based motion tracker may identify a machine by its location in the gym;
- A smartphone app may send user ID and exercise selection.

In at least one embodiment, time-period matching may be performed. In at least one embodiment, liens 1404 may be generated and stored, each of which may assert a particular user's 250 current occupancy of a particular machine. A timeout interval of optional length may be established, after which lien 1404 automatically expires. Optionally, this timeout may be extended by the completion of a new set (for example, in the scenario where a short rest may be permitted during exercise).

Alternatively, the timeout period may be extended, for example upon detection of continued occupancy by user 250 of the machine, for example via a pressure sensor embedded in the seat of the machine, a light-beam detector, a video camera, and/or the like.

In at least one embodiment, a backward-looking timeout may be established into the past usage of the machine, to determine if any orphan packets should be associated with current user 250.

In this manner, any suitable methodology based upon temporal proximity between packets 1405 and machine occupancy detections (representated as liens 1404) may be used in the matching process 1403. One skilled in the art will recognize that other mechanisms may be used for such matching, depending on evolving social and behavioral norms and user adaptations to technology changes of automatic data capture.

In at least one embodiment, event timestamps may be employed in machining step 1403. High-precision time protocols such as NTP (network time protocol) may be used to assure validity and synchrony with the timestamps of other data streams, including device 114 and all other network devices involved in data capture. In at least one embodiment, global unique identifiers (UUIDs) for all components (including for example, devices 114, machines, users 250, packets 1405, liens 1404, exercises, and/or the like) may be made readily available to assure identification validity, either as UUIDs inherent in the objects, or as assigned within modern databases.

### Power Conservation

In many exercise environments, power conservation may be an important consideration, since many exercise machines do not have access to AC power outlets. Accordingly, in at least one embodiment, device 114 may be configured to minimize power usage. For example, tension sensor 109 may be configured to enter a dormant mode (such as a "sleep" mode) to conserve power. Acceleration sensor 113 may be configured to be interrupt-capable, and may be configured to activate tension sensor 109 when acceleration sensor 113 detects motion. Once tension sensor 109 has been activated, the system may be configured to discriminate between (1) an actual set of repetitions commenced by user 250, and (2) another event that does not correspond to set of repetitions, commonly a shorter, more transient acceleration. When the interrupt cycle first commences, it may be difficult to determine whether the detected tension/motion is a set or another event; therefore, the system may be configured to initially collect data as if it were the former. If, however, tension sensor 109 does not continue to detect substantial, sustained tension after a short period of time, the system may assume that another more transient event has occurred. At this point, the data already collected may be repurposed to instead recalibrate the baseline tension, since changes in the cable tension path may have been made.

For example, user 250 may take off a two-pound handle and reattach a ten-pound handle instead. Such an operation may cause a momentary spike in tension, which may be detected by tension sensor 109. Assuming user 250 is trying to lift a 30-pound weight on the other end of the cable, the former baseline weight was two pounds where the user would therefore have been lifting a net weight of 28 pounds, the new net weight would be 20 pounds instead, with a ten- pound baseline. Accordingly, in the quiescent period following either a detected set or a transient event, the system may recalibrate baseline tension with the new data, initializing the set data and discarding the data for the transient event.

The present apparatus and method have been described in particular detail with respect to possible embodiments. Those of skill in the art will appreciate that the apparatus and method may be practiced in other embodiments. First, the particular naming of the components, capitalization of terms, the attributes, data structures, or any other programming or structural aspect is not mandatory or significant, and the mechanisms and/or features may have different names, formats, or protocols. Further, the apparatus may be implemented via a combination of hardware and software, or entirely in hardware elements, or entirely in software elements. In addition, the particular division of functionality between the various components described herein is merely exemplary, and not mandatory; functions performed by a single component may instead be performed by multiple components, and functions performed by multiple components may instead be performed by a single component.

Reference in the specification to "one embodiment" or to "an embodiment" means that a particular feature, structure, or characteristic described in connection with the embodiments may be included in at least one embodiment. The appearances of the phrases "in one embodiment" or "in at least one embodiment" in various places in the specification are not necessarily all referring to the same embodiment.

Various embodiments may include any number of apparatuses, devices, components, and/or methods for performing the above-described techniques, either singly or in any combination. Another embodiment includes a computer program product comprising a non-transitory computer-readable storage medium and computer program code, encoded on the medium, for causing a processor in a computing device or other electronic device to perform the above-described techniques.

Some portions of the above are presented in terms of algorithms and symbolic representations of operations on data bits within a memory of a computing device. These algorithmic descriptions and representations are the means used by those skilled in the data processing arts to most effectively convey the substance of their work to others skilled in the art. An algorithm is here, and generally, conceived to be a self-consistent sequence of steps (instructions) leading to a desired result. The steps may be those requiring physical manipulations of physical quantities. Usually, though not necessarily, these quantities take the form of electrical, magnetic or optical signals capable of being stored, transferred, combined, compared and otherwise manipulated. It may be convenient at times, principally for reasons of common usage, to refer to these signals as bits, values, elements, symbols, characters, terms, numbers, or the like. Furthermore, it may also be convenient at times to refer to certain arrangements of steps requiring physical manipulations of physical quantities as modules or code devices, without loss of generality.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "displaying" or "determining" or the like, refer to the action and processes of a computer system, or similar electronic computing module and/or device, that manipulates and transforms data represented as physical (electronic) quantities within the computer system memories or registers or other such information storage, transmission or display devices.

Certain aspects include process steps and instructions described herein in the form of an algorithm. It should be noted that the process steps and instructions may be embodied in software, firmware and/or hardware, and when embodied in software, may be downloaded to reside on and be operated from different platforms used by a variety of operating systems.

The present document also relates to an apparatus for performing the operations herein. This apparatus may be specially constructed for the required purposes, or it may comprise a general-purpose computing device selectively activated or reconfigured by a computer program stored in the computing device. Such a computer program may be stored in a computer readable storage medium, such as, but is not limited to, any type of disk including floppy disks, optical disks, CD-ROMs, DVD-ROMs, magnetic-optical disks, read-only memories (ROMs), random access memories (RAMs), EPROMs, EEPROMs, flash memory, solid state drives, magnetic or optical cards, application specific integrated circuits (ASICs), or any type of media suitable for storing electronic instructions, and each coupled to a computer system bus. Further, the computing devices referred to herein may include a single processor or may be architectures employing multiple processor designs for increased computing capability.

The algorithms and displays presented herein are not inherently related to any particular computing device, virtualized system, or other apparatus. Various general-purpose systems may also be used with programs in accordance with the teachings herein, or it may prove convenient to construct more specialized apparatus to perform the required method steps. The required structure for a variety of these systems will be apparent from the description provided herein. In addition, the apparatus and method are not described with reference to any particular programming language. It will be appreciated that a variety of programming languages may be used to implement the teachings described herein, and any references above to specific languages are provided for disclosure of enablement and best mode.

Accordingly, various embodiments include software, hardware, and/or other elements for controlling a computer system, computing device, or other electronic device, or any combination or plurality thereof. Such an electronic device can include, for example, a processor, an input device (such as a keyboard, mouse, touchpad, track pad, joystick, trackball, microphone, and/or any combination thereof), an output device (such as a screen, speaker, and/or the like), memory, long-term storage (such as magnetic storage, optical storage, and/or the like), and/or network connectivity, according to techniques that are well known in the art. Such an electronic device may be portable or non-portable. Examples of electronic devices that may be used for implementing the described apparatus and method include: a mobile phone, personal digital assistant, smartphone, kiosk, server computer, enterprise computing device, desktop computer, laptop computer, tablet computer, consumer electronic device, or the like. An electronic device may use any operating system such as, for example and without limitation: Linux; Microsoft Windows, available from Microsoft Corporation of Redmond, Washington; MacOS, available from Apple Inc. of Cupertino, California; iOS, available from Apple Inc. of Cupertino, California; Android, available from Google, Inc. of Mountain View, California; and/or any other operating system that may be adapted for use on the device.

While a limited number of embodiments have been described herein, those skilled in the art, having benefit of the above description, will appreciate that other embodiments may be devised. In addition, it should be noted that the language used in the specification has been principally selected for readability and instructional purposes, and may not have been selected to delineate or circumscribe the subject matter. Accordingly, the disclosure is intended to be illustrative, but not limiting, of scope.

## Claims

1. A cabled-resistance exercise machine (201) including an apparatus for tracking user activity of the exercise machine, the apparatus comprising:
a tension sensor (109), positioned within a tension linkage path of the cabled-resistance exercise machine, the tension sensor adapted to automatically measure tension along the tension linkage path and further adapted to automatically output an electrical signal representing the measured tension;
at least one connector (102), each adapted to connect the tension sensor to a cable (100) along the tension linkage path of the cabled-resistance exercise machine;
a logic circuit (111), communicatively coupled to the tension sensor, adapted to receive the electrical signal representing the measured tension and to automatically generate, from the electrical signal, at least one value for at least one metric associated with an exercise performed by the user (250) on the cabled-resistance exercise machine; and
a slack removal device (300; 900), coupled to the tension sensor, adapted to reduce or remove slack from the cable; and **characterised in that**:
the slack removal device comprises:
a housing block (301) and a cylindrical core (302) positioned within the housing block, forming a substantially circular channel (303) surrounding the cylindrical core adapted to receive excess cable; or
a cavity (901) for guiding the cable along a substantially helical path.

2. The cabled-resistance exercise machine of claim 1, wherein:
the at least one metric comprises at least a count of the number of exercise repetitions performed by the user on the cabled-resistance exercise machine within a period of time; and/or:
the at least one metric comprises at least one selected from the group consisting of:
a measure of peak speed of movement of a resistive load (107) while the user is performing at least one exercise;
a measure of average speed of movement of the resistive load while the user is performing at least one exercise;
a measure of peak acceleration of the resistive load while the user is performing at least one exercise;
a measure of average acceleration of the resistive load while the user is performing at least one exercise;
a measure of the resistive load moved by the user while performing at least one exercise;
a measure of the total work performed by the user while performing at least one exercise; and
a measure of the total calories burned by the user while performing at least one exercise.

3. The cabled-resistance exercise machine of claim 1 or 2, wherein the cable supports a weight and is adapted to lift the weight in response to exercises performed by the user.

4. The cabled-resistance exercise machine of any preceding claim, wherein the tension sensor, the at least one connector, and the logic circuit are contained within an assembly adapted to be attached to the exercise machine.

5. The cabled-resistance exercise machine of claim 4, wherein the assembly is removable.

6. The cabled-resistance exercise machine of any preceding claim, the apparatus further comprising:
an acceleration sensor (113), adapted to automatically measure acceleration along the tension linkage path and further adapted to automatically output an electrical signal representing the measured acceleration.

7. The cabled-resistance exercise machine of claim 6, wherein:
the tension sensor is configured to be in a dormant state, and the acceleration sensor is configured to activate the tension sensor from its dormant state in response to acceleration being detected along the tension linkage path.

8. The cabled-resistance exercise machine of any preceding claim, the apparatus further comprising an output device, communicatively coupled to the logic circuit, adapted to output the generated value for the at least one metric and, optionally, wherein the output device is adapted to output the generated value for the at least one metric in real-time while the user is performing exercise repetitions on the cabled-resistance exercise machine.

9. The cabled-resistance exercise machine of any preceding claim, wherein the cabled-resistance exercise machine comprises a strength training exercise machine.

10. The cabled-resistance exercise machine of any preceding claim, the apparatus further comprising:
an analog-to-digital converter (ADC, 116), adapted to receive the electrical signal representing the measured tension and to convert the electrical signal to a digital signal; and
wherein the logic circuit (111) is adapted to receive the digital signal and to transform the digital signal into digital tension time-series data.

11. The cabled-resistance exercise machine of claim 10, the apparatus further comprising:
a user identification component, communicatively coupled to the logic circuit and adapted to identify the user performing exercise repetitions; and, optionally, wherein:
the user identification component comprises at least one selected from the group consisting of:
an ID token reader (122);
a keypad (117);
a biometric scanner;
a smartphone app;
a smart watch app; and
an NFC reader.

12. The cabled-resistance exercise machine of claim 11, wherein the logic circuit is further adapted to map the digital tension time-series data to the identified user, optionally to map the digital tension time-series data to the identified user substantially in real-time upon the user completing the exercise repetitions.

13. The cabled-resistance exercise machine of claim 11 or 12, wherein the logic circuit is further adapted to perform off-line mapping of the digital tension time-series data to the identified user.

14. The cabled-resistance exercise machine of any of claims 10 to 13, the apparatus further comprising:
a wireless radio transceiver (112), communicatively coupled to the logic circuit, adapted to transmit the digital tension time-series data to a server for further processing;
a server, adapted to receive the digital tension time-series data from the wireless radio transceiver, and further adapted to process the received data and generate reports (500) therefrom;
an output device, communicatively coupled to the server, adapted to output the generated reports; and
a storage device (123), communicatively coupled to the server, adapted to store the generated reports.

## Patentansprüche

1. Kabelzug-Trainingsgerät (201), das eine Einrichtung zur Erfassung der Benutzeraktivität am Trainingsgerät einschließt, wobei die Einrichtung Folgendes umfasst:
einen Zugkraftsensor (109), der innerhalb eines Zugkraftübertragungswegs des Kabelzug-Trainingsgeräts positioniert ist, wobei der Zugkraftsensor dazu ausgelegt ist, automatisch die Zugkraft entlang des Zugkraftübertragungswegs zu messen, und weiter dazu ausgelegt ist, automatisch ein elektrisches Signal auszugeben, das die gemessene Zugkraft darstellt;
mindestens einen Verbinder (102), der jeweils dazu ausgelegt ist, den Zugkraftsensor entlang des Zugkraftübertragungswegs des Kabelzug-Trainingsgeräts mit einem Kabel (100) zu verbinden;
eine Logikschaltung (111), die kommunikativ mit dem Zugkraftsensor verbunden ist und dazu ausgelegt ist, das die Zugkraft darstellende elektrische Signal zu empfangen und anhand des elektrischen Signals automatisch mindestens einen Wert für mindestens eine Messgröße zu erzeugen, die mit einer vom Benutzer (250) an dem Kabelzug-Trainingsgerät durchgeführten Übung in Zusammenhang steht; und
eine Vorrichtung (300; 900) zur Beseitigung von Kabeldurchhang, die mit dem Zugkraftsensor gekoppelt ist und dazu ausgelegt ist, Kabeldurchhang zu verringern oder zu beseitigen; **dadurch gekennzeichnet, dass**:
die Vorrichtung zur Beseitigung von Kabeldurchhang Folgendes umfasst:
einen Gehäuseblock (301) und einen zylindrischen Kern (302), der innerhalb des Gehäuseblocks angeordnet ist und einen im Wesentlichen kreisförmigen Kanal (303) bildet, der den zylindrischen Kern umgibt und zur Aufnahme von überschüssigem Kabel ausgelegt ist; oder
einen Hohlraum (901) zum Führen des Kabels entlang einer im Wesentlichen spiralförmigen Bahn.

2. Kabelzug-Trainingsgerät nach Anspruch 1, wobei:
die mindestens eine Messgröße mindestens eine Zählung der Anzahl der Übungswiederholungen umfasst, die der Benutzer an dem Kabelzug-Trainingsgerät innerhalb eines bestimmten Zeitraums durchführt; und/oder:
die mindestens eine Messgröße mindestens ein Element ausgewählt aus der folgenden Gruppe umfasst:
ein Maß für die maximale Bewegungsgeschwindigkeit einer widerstandsbehafteten Last (107), während der Benutzer mindestens eine Übung ausführt;
ein Maß für die durchschnittliche Bewegungsgeschwindigkeit der widerstandsbehafteten Last, während der Benutzer mindestens eine Übung ausführt;
ein Maß für die maximale Beschleunigung der widerstandsbehafteten Last, während der Benutzer mindestens eine Übung ausführt;
ein Maß für die durchschnittliche Beschleunigung der widerstandsbehafteten Last, während der Benutzer mindestens eine Übung ausführt;
ein Maß für die widerstandsbehaftete Last, die der Benutzer bei der Ausführung mindestens einer Übung bewegt;
ein Maß für die Gesamtarbeit, die der Benutzer bei der Ausführung mindestens einer Übung geleistet hat; und
ein Maß für die Gesamtmenge an Kalorien, die der Benutzer bei der Ausübung mindestens einer Übung verbrennt.

3. Kabelzug-Trainingsgerät nach Anspruch 1 oder 2, wobei das Kabel ein Gewicht trägt und dazu ausgelegt ist, das Gewicht als Reaktion auf die vom Benutzer durchgeführten Übungen anzuheben.

4. Kabelzug-Trainingsgerät nach einem vorstehenden Anspruch, wobei der Zugkraftsensor, der mindestens ein Verbinder und die Logikschaltung in einer Baugruppe enthalten sind, die dazu ausgelegt ist, an dem Trainingsgerät befestigt zu werden.

5. Kabelzug-Trainingsgerät nach Anspruch 4, wobei die Baugruppe abnehmbar ist.

6. Kabelzug-Trainingsgerät nach einem vorstehenden Anspruch, die Einrichtung weiter umfassend:
einen Beschleunigungssensor (113), der dazu ausgelegt ist, automatisch die Beschleunigung entlang des Zugkraftübertragungswegs zu messen, und weiter dazu ausgelegt ist, automatisch ein die gemessene Beschleunigung darstellendes Signal auszugeben.

7. Kabelzug-Trainingsgerät nach Anspruch 6, wobei:
der Zugkraftsensor so konfiguriert ist, dass er sich in einem Ruhezustand befindet, und der Beschleunigungssensor so konfiguriert ist, dass er den Zugkraftsensor aus seinem Ruhezustand aktiviert, sobald eine Beschleunigung entlang des Zugkraftübertragungswegs erkannt wird.

8. Kabelzug-Trainingsgerät nach einem vorstehenden Anspruch, die Einrichtung weiter umfassend eine Ausgabevorrichtung, die kommunikativ mit der Logikschaltung gekoppelt ist und dazu ausgelegt ist, den erzeugten Wert für die mindestens eine Messgröße auszugeben, und optional, wobei die Ausgabevorrichtung dazu ausgelegt ist, den erzeugten Wert für die mindestens eine Messgröße in Echtzeit auszugeben, während der Benutzer Übungswiederholungen an dem Kabelzug-Trainingsgerät durchführt.

9. Kabelzug-Trainingsgerät nach einem vorstehenden Anspruch, wobei das Kabelzug-Trainingsgerät ein Krafttrainingsgerät umfasst.

10. Kabelzug-Trainingsgerät nach einem vorstehenden Anspruch, die Einrichtung weiter umfassend:
einen Analog-Digital-Wandler (ADC, 116), der dazu ausgelegt ist, das die gemessene Zugkraft darstellende elektrische Signal zu empfangen und das elektrische Signal in ein digitales Signal umzuwandeln; und
wobei die Logikschaltung (111) dazu ausgelegt ist, das digitale Signal zu empfangen und das digitale Signal in digitale Zugkraft-Zeitreihendaten umzuwandeln.

11. Kabelzug-Trainingsgerät nach Anspruch 10, die Einrichtung weiter umfassend Folgendes: eine Benutzeridentifizierungskomponente, die kommunikativ mit der Logikschaltung gekoppelt ist und dazu ausgelegt ist, den Benutzer zu identifizieren, der die Übungswiederholungen durchführt; und optional, wobei die Benutzeridentifizierungskomponente mindestens eine Komponente ausgewählt aus der folgenden Gruppe umfasst:
ein ID-Token-Lesegerät (122);
ein Tastenfeld (117);
einen biometrischen Scanner;
eine Smartphone-App;
eine Smartwatch-App; und
ein NFC-Lesegerät.

12. Kabelzug-Trainingsgerät nach Anspruch 11, wobei die Logikschaltung weiter dazu ausgelegt ist, die digitalen Zugkraft-Zeitreihendaten dem identifizierten Benutzer zuzuordnen, optional die digitalen Zugkraft-Zeitreihendaten dem identifizierten Benutzer im Wesentlichen in Echtzeit zuzuordnen, sobald der Benutzer die Übungswiederholungen abgeschlossen hat.

13. Kabelzug-Trainingsgerät nach Anspruch 11 oder 12, wobei die Logikschaltung weiter dazu ausgelegt ist, eine Offline-Zuordnung der digitalen Zugkraft-Zeitreihendaten zu dem identifizierten Benutzer durchzuführen.

14. Kabelzug-Trainingsgerät nach einem der Ansprüche 10 bis 13, wobei die Einrichtung weiter umfasst:
einen drahtloser Funk-Sendeempfänger (112), der kommunikativ mit der Logikschaltung gekoppelt ist und dazu ausgelegt ist, die digitalen Zugkraft-Zeitreihendaten zur weiteren Verarbeitung an einen Server zu übertragen;
einen Server, der dazu ausgelegt ist, die digitalen Zugkraft-Zeitreihendaten von dem drahtlosen Funk-Sendeempfänger zu empfangen, und weiter dazu ausgelegt ist, die empfangenen Daten zu verarbeiten und daraus Berichte (500) zu erstellen;
eine Ausgabevorrichtung, die kommunikativ mit dem Server gekoppelt ist und dazu ausgelegt ist, die erstellten Berichte auszugeben; und
eine Speicherungsvorrichtung (123), die kommunikativ mit dem Server gekoppelt ist und dazu ausgelegt ist, die erstellten Berichte zu speichern.

## Revendications

1. Machine d'exercice à résistance par câble (201) incluant un appareil pour suivre une activité d'utilisateur de la machine d'exercice, l'appareil comprenant :
un capteur de tension (109), positionné dans un chemin de liaison de tension de la machine d'exercice à résistance par câble, le capteur de tension étant adapté pour mesurer automatiquement la tension le long du chemin de liaison de tension et adapté en outre pour émettre automatiquement un signal électrique représentant la tension mesurée ;
au moins un connecteur (102), chacun étant adapté pour connecter le capteur de tension à un câble (100) le long du chemin de liaison de tension de la machine d'exercice à résistance par câble ;
un circuit logique (111), couplé en communication au capteur de tension, adapté pour recevoir le signal électrique représentant la tension mesurée et pour générer automatiquement, à partir du signal électrique, au moins une valeur pour au moins une métrique associée à un exercice effectué par l'utilisateur (250) sur la machine d'exercice à résistance par câble ; et
un dispositif de suppression de jeu (300 ; 900), couplé au capteur de tension, adapté pour réduire ou supprimer le jeu du câble ; et **caractérisée en ce que** :
le dispositif de suppression de jeu comprend :
un bloc de boîtier (301) et un noyau cylindrique (302) positionné à l'intérieur du bloc de boîtier, formant un canal sensiblement circulaire (303) entourant le noyau cylindrique adapté pour recevoir un câble excédentaire ; ou
une cavité (901) pour guider le câble le long d'un chemin sensiblement hélicoïdal.

2. Machine d'exercice à résistance par câble selon la revendication 1, dans laquelle :
au moins une métrique comprend au moins un décompte du nombre de répétitions d'exercice effectuées par l'utilisateur sur la machine d'exercice à résistance par câble pendant une période de temps ; et/ou :
la au moins une métrique comprend au moins une métrique sélectionnée parmi le groupe consistant en :
une mesure de la vitesse de pointe de déplacement d'une charge résistive (107) pendant que l'utilisateur effectue au moins un exercice ;
une mesure de la vitesse moyenne de déplacement de la charge résistive pendant que l'utilisateur effectue au moins un exercice ;
une mesure de l'accélération maximale de la charge résistive pendant que l'utilisateur effectue au moins un exercice ;
une mesure de l'accélération moyenne de la charge résistive pendant que l'utilisateur effectue au moins un exercice ;
une mesure de la charge résistive déplacée par l'utilisateur lors de la réalisation d'au moins un exercice ;
une mesure du travail total réalisé par l'utilisateur lors de la réalisation d'au moins un exercice ; et
une mesure des calories totales brûlées par l'utilisateur lors de la réalisation d'au moins un exercice.

3. Machine d'exercice à résistance par câble selon la revendication 1 ou 2, dans laquelle le câble supporte un poids et est adapté pour soulever le poids en réponse à des exercices réalisés par l'utilisateur.

4. Machine d'exercice à résistance par câble selon une quelconque revendication précédente, dans laquelle le capteur de tension, le au moins un connecteur et le circuit logique sont contenus dans un ensemble adapté pour être fixé à la machine d'exercice.

5. Machine d'exercice à résistance par câble selon la revendication 4, dans laquelle l'ensemble est amovible.

6. Machine d'exercice à résistance par câble selon une quelconque revendication précédente, l'appareil comprenant en outre
un capteur d'accélération (113), adapté pour mesurer automatiquement l'accélération le long du chemin de liaison de tension et adapté en outre pour émettre automatiquement un signal électrique représentant l'accélération mesurée.

7. Machine d'exercice à résistance par câble selon la revendication 6, dans laquelle :
le capteur de tension est configuré pour être en état dormant, et le capteur d'accélération est configuré pour activer le capteur de tension à partir de son état dormant en réponse à une accélération qui est détectée le long du chemin de liaison de tension.

8. Machine d'exercice à résistance par câble selon une quelconque revendication précédente, l'appareil comprenant en outre un dispositif de sortie, couplé en communication au circuit logique, adapté pour fournir la valeur générée pour la au moins une métrique et, facultativement, dans laquelle le dispositif de sortie est adapté pour fournir la valeur générée pour la au moins une métrique en temps réel pendant que l'utilisateur effectue des répétitions d'exercice sur la machine d'exercice à résistance par câble.

9. Machine d'exercice à résistance par câble selon une quelconque revendication précédente, dans laquelle la machine d'exercice à résistance par câble comprend une machine d'exercice d'entraînement musculaire.

10. Machine d'exercice à résistance par câble selon une quelconque revendication précédente, l'appareil comprenant en outre :
un convertisseur analogique-numérique (CAN, 116), adapté pour recevoir le signal électrique représentant la tension mesurée et pour convertir le signal électrique en un signal numérique ; et
dans laquelle le circuit logique (111) est adapté pour recevoir le signal numérique et pour transformer le signal numérique en données chronologiques de tension numérique.

11. Machine d'exercice à résistance par câble selon la revendication 10, l'appareil comprenant en outre : un composant d'identification d'utilisateur, couplé en communication au circuit logique et adapté pour identifier l'utilisateur réalisant des répétitions d'exercice ; et, facultativement, dans laquelle : le composant d'identification d'utilisateur comprend au moins un élément choisi dans le groupe constitué par :
un lecteur de jeton d'ID (122) ;
un clavier (117) ;
un scanner biométrique ;
une application pour smartphone ;
une application de montre intelligente ; et
un lecteur NFC.

12. Machine d'exercice à résistance par câble selon la revendication 11, dans laquelle le circuit logique est en outre adapté pour mapper les données chronologiques de tension numérique à l'utilisateur identifié, facultativement pour mapper les données chronologiques de tension numérique à l'utilisateur identifié sensiblement en temps réel une fois que l'utilisateur a terminé les répétitions d'exercice.

13. Machine d'exercice à résistance par câble selon la revendication 11 ou 12, dans laquelle le circuit logique est en outre adapté pour réaliser une cartographie hors ligne des données chronologiques de tension numérique pour l'utilisateur identifié.

14. Machine d'exercice à résistance par câble selon l'une quelconque des revendications 10 à 13, l'appareil comprenant en outre :
un émetteur-récepteur radio sans fil (112), couplé en communication au circuit logique, adapté pour transmettre les données de chronologiques de tension numérique à un serveur pour un traitement ultérieur ;
un serveur, adapté pour recevoir les données chronologiques de tension numérique en provenance de l'émetteur-récepteur radio sans fil, et adapté en outre pour traiter les données reçues et générer des rapports (500) à partir de celles-ci ;
un dispositif de sortie, couplé en communication au serveur, adapté pour délivrer les rapports générés ; et
un dispositif de stockage (123), couplé en communication au serveur, adapté pour stocker les rapports générés.
